# EUROPEAN PATENT APPLICATION

(11) **EP 1 995 483 A2**
(43) Date of publication of application: **26.11.2008**
(21) Application number: 08153769.8
(22) Date of filing: 31.03.2008
(51) Int. Cl.: F16D 25/0638

(54) **Automatic device for controlling a clutch group integrated with a hydraulic follow-up link to carry out the controlled sliding of the plates of the clutch**

(30) Priority: 25.05.2007 IT MI20071071
(71) Applicant: PIAGGIO & C. S.p.A., 56025 Pontedera (Pisa) (IT)
(72) Inventor: Martini, Federico, 56025 Pontedera (Pisa) (IT)
(74) Representative: De Gregori, Antonella

(57) **Abstract**

The invention describes an automatic device for controlling the clutch group (10) of a vehicle. The clutch group (10) comprises one or more plates (12, 14) biased by one or more springs (16). The plates (12, 14) are actuated by means of a thrust plate (24) supported on a thrust shaft (18) housed with mobile coupling at the end of the primary shaft of the gearshift (20). Inside the thrust shaft (18) channels are foreseen to make pressurised oil flow that feeds an airtight chamber (64) formed inside the casing (76) of the clutch (10). The pressurised oil contained in the airtight chamber (64) actuates mobile equipment capable of providing an additional biasing, with respect to the biasing supplied by the springs (16), on the plates (12, 14) when the manual control of the clutch (10) is not actuated.

## Description

The present invention refers to an automatic device for controlling a clutch group, integrated with a hydraulic follow-up link, to carry out the controlled sliding of the plates of the clutch of a vehicle, in particular but not necessarily a two-wheeled vehicle.

The increasing use, on two-wheeled vehicles, of four-stroke engine with large displacement and high performance has led to stability problems during deceleration. Due to the high braking torque values offered by these propulsors, they tend to lock the rear drive wheel or make it bounce. Therefore, constructors have the need to make clutches with increasingly sophisticated bounce-prevention devices to ensure better stability during braking.

In sporting use of a motorcycle, especially in full throttle, the weight of the motorcycle itself and of the driver move the barycentre towards the forecarriage, thus substantially lightening the rear axle. Normally, full throttle is also accompanied by a rapid gearing down by one or more gears, so as to always keep the engine within the optimal range of use, exploiting the engine brake to the greatest possible extent to slow down in the smallest possible space. In these conditions the drive wheel, almost completely released, begins to bounce and skid, losing the optimal attitude of the motorcycle and thus preventing safe and correct curve entry.

Therefore special so-called slipper clutches have been studied, whose purpose is to limit the excess braking torque by means of a controlled slipping of the clutch plates, actually separating the primary transmission from the secondary transmission.

In the field of road races the slipper clutch satisfies the dual requirement for performance and reliability. Performance is linked to the possibility of forcing braking as much as possible keeping the drive wheel pressed against the ground, thus avoiding bouncing from starting that would affect the attitude of the motorcycle. Reliability, on the other hand is connected to the reduction of overrevving that could occur in full throttle, with a consequent increase in mechanical stresses. These stresses are also high in motocross bike, when in landing from a long jump the transmission must withstand great stresses due to the rapid variation in angular velocity.

In other off-road and low traction conditions, the bounce-prevention function ensures stability during deceleration, since the clutch dampens the repeated bumps of the tyre on the ground, preventing it from locking.

In most cases, the known bounce-prevention devices currently used on motorcycles are integrated in the clutch group, where in general a biasing is established on the plates, due to springs, which is what is considered optimal to limit bouncing but which is insufficient to transmit the maximum torque of the engine. The addition of biasing is thus provided by ramp or propeller systems which, based upon the value of the inclination, provide under torque the necessary increased thrust. Of course, this value, being slaved to the torque of the engine, cancels out at the moment when the gas is turned off, making the clutch go back into the low prebiasing conditions. In some cases, the propeller system slaved to the torque is used with double effect, i.e. to increase biasing on the plates during acceleration and reduction of biasing when, with the turning off of the gas, the torque inverts arriving from the drive wheel. These systems generally offer the advantage of a low biasing on the clutch control lever, but at the expense of substantial complexity of manufacture.

Another type of bounce-prevention device foresees the use of a conventional clutch, with a sufficient biasing of springs on the plates to transmit all of the torque of the engine. In this case, the reduction of the biasing to cause the slipping of the plates is carried out by a depression system, through an airtight chamber formed inside the clutch cover, with a membrane that creates a mobile wall connected to the thrust plate. When the gas is shut off, the depression value at the manifold increases, generating a force on the wall of the membrane that lightens the biasing of the springs in this way making the bounce-prevention condition.

The models of clutch with follow-up link to the torque of the type described above, whilst being amongst the most common, do however consist of complex groups made with many specific components compared to conventional clutches. Moreover, for some of these components the most advanced manufacturing technologies are required, in order to withstand the stresses coming from the high powers of current propulsors.

Clutch groups thus conceived must be made by specialised firms, at a certainly high end cost that limits their use on motorcycles with medium displacement. On the other hand, on motorcycles with large displacement intended for sporting use these devices are increasingly common, but they do not always manage to completely satisfy the expectations of some customers who have ever-increasing needs.

Making a brief analysis of the behaviour of these slipper clutches, it can without hesitation be stated that they solve many of the problems that could emerge from the use of conventional clutches, with a normal driving style. However, when a high-performance motorcycle is used at its limit, for example in sporting competitions, the problems to be solves are ever greater.

Considering all of the above, there is now a need to solve the problems of clutch groups equipped with known bounce-prevention devices, by foreseeing less complex devices, suitable for vehicles not necessarily conceived for sporting use and, as far as possible, positioned outside of the clutch group. In this way, the clutch group, already set up to perform a delicate and in some cases onerous task, is not burdened by further function that makes its configuration and manufacture more complicated, also with reference to the assembly and maintenance operations.

The purpose of the present invention is therefore to make an automatic device for controlling a clutch group, integrated with a hydraulic follow-up link, to carry out the controlled sliding of the plates of the clutch of a vehicle, in particular but not necessarily a two-wheeled vehicle, able to be combined with ease with any type of conventional clutch group.

Another purpose of the invention is to make an automatic device for controlling a clutch group that requires an effort that is reduced to the minimum from the user of the vehicle to actuate the clutch.

Yet another purpose of the invention is to make an automatic device for controlling a clutch group that is simple to construct and low-cost, thus also adaptable to motorcycles of average displacement with not particularly high-level performance.

These purposes according to the present invention are accomplished by making an automatic device for controlling a clutch group in which the addition of biasing necessary to transmit the maximum torque is provided by a progressive hydraulic follow-up link and variable with the controlled pressure of the engine oil, which feeds an airtight chamber formed inside the casing of the clutch with a membrane that creates a mobile wall connected to the thrust plate.

By manually actuating the clutch control, with the first stroke portion the flow of oil is interrupted zeroing the pressure inside the thrust chamber carried out with the membrane on the casing of the clutch, thus the addition of hydraulic biasing is ruled out before the intervention on the prebiasing of the springs.

Continuing with the actuation of the manual control, there is intervention on the prebiasing of the springs until the clutch plates are completely detached. With this device, the maximum biasing on the control always remains that of calibration of the springs, which is set in the design step and is that which is considered optimal to limit the bouncing of the rear drive wheel during deceleration of the vehicle, making the clutch slip.

The characteristics and advantages of an automatic device for controlling a clutch group, integrated with a hydraulic follow-up link, to carry out the controlled sliding of the plates of the clutch of a vehicle according to the present invention shall become clearer from the following description, given as a non-limiting example, referring to the attached schematic drawings, in which:

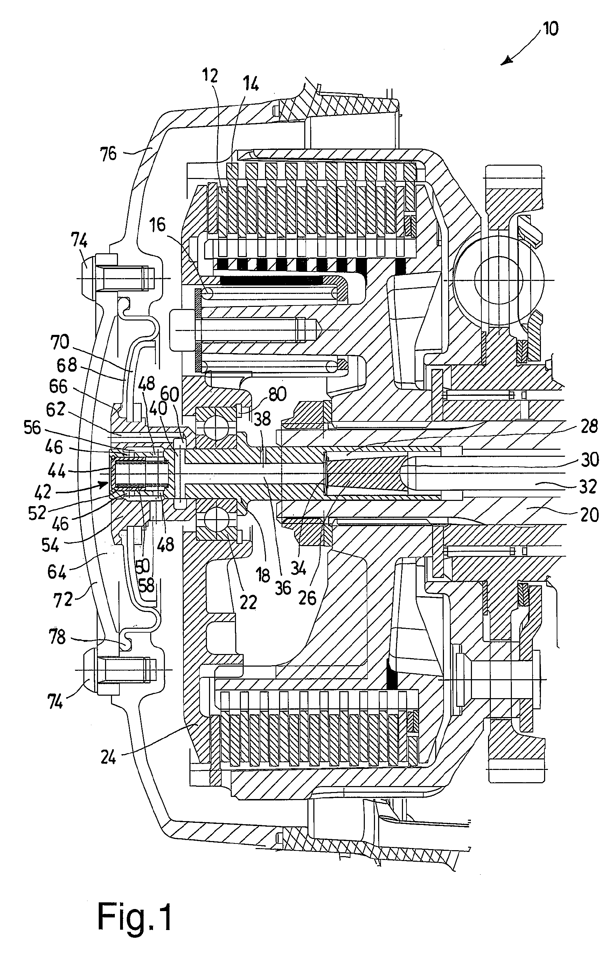

figure 1 is a section view of an automatic device for controlling a clutch group according to the present invention, in a stop position of the engine of the vehicle or with the engine operating with the clutch not interlocked or partially interlocked with the hydraulic system;
figures 2A and 2B are section views, in detail and in enlarged detail respectively, of a detail of the device of figure 1, in a condition of maximum follow-up link with the engine at average-high operating speeds;
figures 3A and 3B are section views, in detail and in enlarged detail respectively, of a detail of the device of figure 1, in a condition in which the manual control of the clutch is only partially actuated;
figure 4 is a section view of the device of figure 1, with the manual control of the clutch completely actuated, where it is possible to see, in addition to the exclusion of the hydraulic follow-up link, the pressure plate displaced together with the entire equipment of the follow-up link;
figure 5 shows a diagram of operation of the automatic device for controlling a clutch group integrated with a hydraulic follow-up link according to the invention, with reference to a conventional clutch;
figure 6 is a section view of the device of figure 1, with hydraulic follow-up link managed electronically; and
figure 7 is a view in detail of the device shown in figure 6, when the electronic management control is actuated.

With reference to the figures, a clutch group is shown, wholly indicated with reference numeral 10, applicable in particular to a motorcycle and of the type comprising one or more plates 12, 14 biased by one or more springs 16. A thrust shaft 18, housed with mobile coupling at the end of the primary shaft of the gearshift 20, through a bearing 22 supports a thrust plate 24 capable of actuating the plates 12, 14 of the clutch 10.

Inside the thrust shaft 18 a cylindrical block 26 is arranged, provided with one or more longitudinal grooves 28 for the passage of oil. At an end of the cylindrical block 26 a spherical impression 30 is formed where it houses the control shaft 32 of the clutch 10.

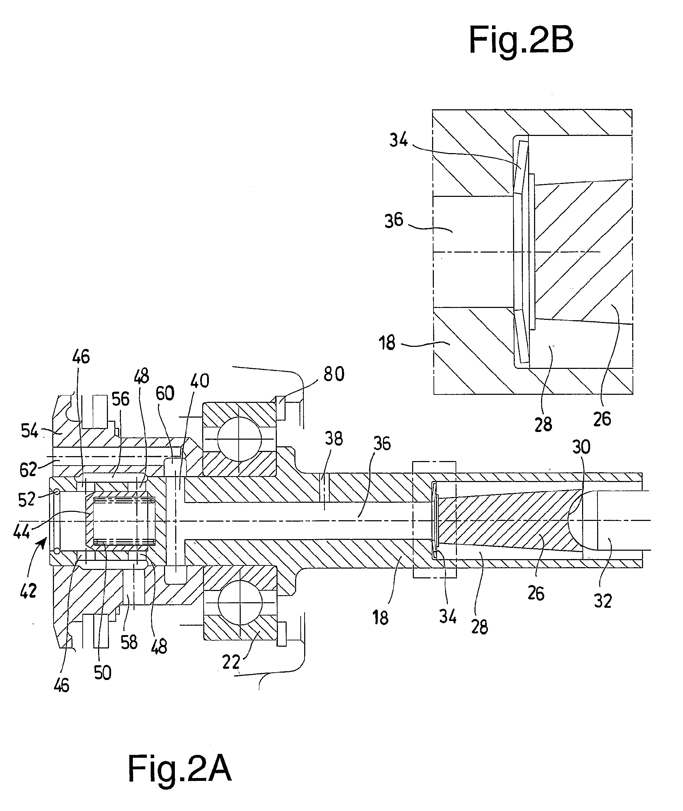

As shown more clearly in the detailed views of figures 2A and 2B, between the other end of the cylindrical block 26, opposite the one on which the spherical impression 30 is formed, and the base of the seat formed inside the thrust shaft 18 an elastic element 34 is arranged consisting in the illustrated example embodiment of a Belleville or diaphragm spring orientated like in the aforementioned figures, which performs the function of an oil delivery valve.

Inside the thrust shaft 18 a longitudinal hole 36 is also formed with which a first hole 38 and a second hole 40 communicate, both formed transversally on the thrust shaft 18 itself, preferably in the direction perpendicular to the axis of the longitudinal hole 36.

At the end of the thrust shaft 18 opposite the one on which the elastic element 34 acts the seat for a oil pressure limitation valve 42 is formed, which is made up of a bowl 44 free to slide along its own housing diameter, in other words in the longitudinal direction of the thrust shaft 18. The limitation valve 42 is provided with transversal holes 46 and 48 for the passage of the pressurised oil and inside of it a spring 50 is foreseen that keeps the bowl 44 prebiased on its own retaining ring 52 when the oil pressure does not reach a certain predetermined value.

Around the end of the thrust shaft 18 on which the limitation valve 42 operates a hub 54 is inserted, provided with a port 56 to discharge the oil in communication with the outside through a transversal hole 58, an inner throat 60 intercepted by a further longitudinal hole 62 for sending the oil into an airtight chamber 64, and a shaping 66 of its outer collar where a membrane 68 and a plate 70 are housed, fixedly connected to the hub 54 by means of a calking, which, with a sealed coupling with the hub 54 itself, make the mobile wall of the aforementioned chamber 64.

The chamber 64 is closed by a cover 72 provided with screws 74 that engage on the circular crown-shaped interface formed on the casing 76 of the clutch 10, where the outer seat for the collar 78 of the membrane 68 is also located.

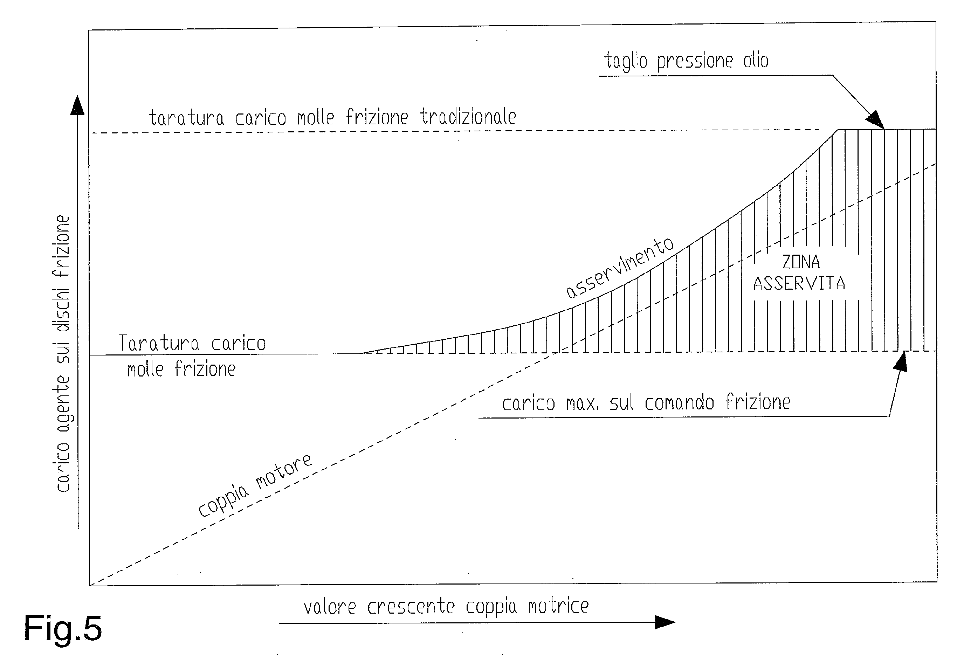

Observing the graph shown in figure 5, where the operation diagram of the automatic device according to the invention with the follow-up link area integrated is represented, it can be seen how by using a conventional clutch group, but with reduced biasing of the springs 16 on the clutch plates 12 and 14, defined in the design step to cause them to slip, it is possible to make on the clutch control an increasing hydraulic follow-up link that is variable in addition to the biasing of the springs 16 themselves. In this way the increased drive torque is provided for with the increase in revolutions of the engine up to the maximum value of the biasing where, with the limitation valve 42, the cut in pressure is caused where the biasing springs would have been established for a conventional clutch.

In order to more easily understand how the actuation of the manual control of the clutch 10 automatically rules out the addition of hydraulic biasing, it is necessary to describe in detail how the path of the oil has been made inside the automatic device integrated with the clutch control itself.

The oil that feeds the thrust chamber 64 comes from the gap existing between the inner hole of the shaft 20 of the gearshift and the control shaft 32 and crosses the longitudinal grooves 28 of the cylindrical block 26, until it reaches the delivery valve consisting of the diaphragm spring 34. When the manual control of the clutch 10 is not actuated, the spring a diaphragm 34 is in its natural conical shape, as can be seen in the detail of figure 2B, leaving an adequate section for the passage of the oil. The oil thus continues on its path reaching the thrust chamber 64, after having crossed the longitudinal 36 and transversal 40 holes formed on the thrust shaft 18, the throat 60 and the hole 62 formed on the hub 54.

The transversal hole 38 that intercepts the main longitudinal hole 36 on the thrust shaft 18 has multiple functions. In addition to ensuring the lubrication of the moving members of the clutch group 10, it has a precise calibration, with a lower passage section, based upon a predetermined ratio, with respect to that made by the valve with the Belleville spring 34. In this way, the flow rate of the oil, increasing with the revolutions of the engine up to a certain operating speed, does not create pressure because it flows out from the hole 38. As the flow rate of the oil increases, the pressure on the entire channelling up to the chamber 64 also increases, giving rise to an additional biasing on the plates 12 and 14 through the mobile equipment of the device, consisting of the hub 54 and the membrane 68 on whose surface the pressure of the oil acts. This generates an axial force that, through the bearing 22 and the relative containment ring 80, acts upon the thrust plate 24.

The pressure of the oil shall gradually increase with the revolutions of the engine, until the pressure limitation valve 42 is made to open, as represented in figure 2A. When the bowl 44, thrusted by the pressurised oil, pulls back compressing the inner spring 50, expels the air contained inside of it through the holes 48 until the holes 46, arranged downstream of the holes 48, are opened, through which the pressurised oil transits from the discharge port 56 to finally come out from the hole 58. These are the stable conditions that occur with the engine at maximum torque operating speed or higher. In this way, the maximum pressure is obtained on the clutch plates 12 and 14, with the higher biasing of the follow-up link added to that of the springs 16.

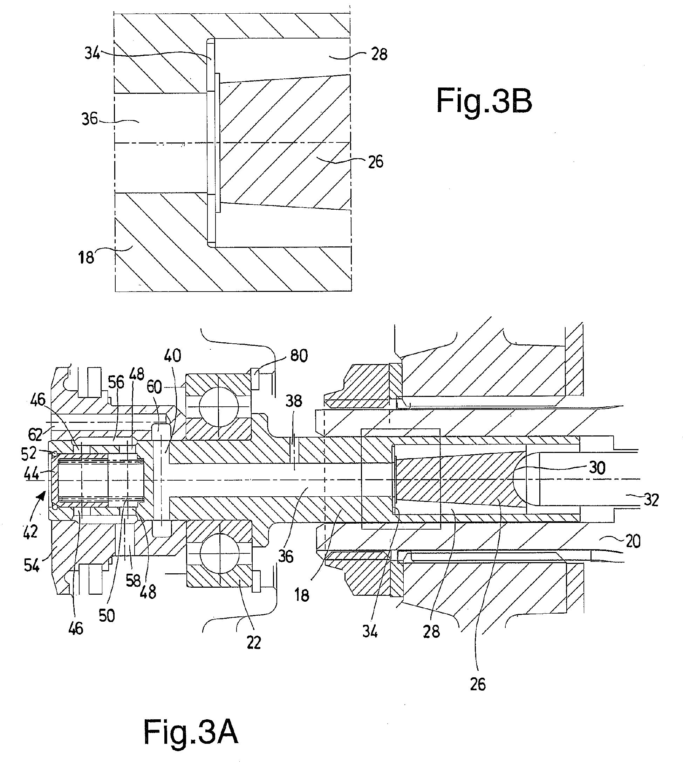

In other operating conditions in which the increase in the follow-up link is partial and the control of the clutch 10 actuates manually, the addition of biasing is automatically ruled out due to the hydraulic follow-up link to zero the pressure of the oil in the device. This is caused with the first stroke portion of the manual control of the clutch 10 when, with a much smaller axial biasing to that which is necessary to overcome the biasing of the clutch springs 16, the Belleville spring 34 is compressed, as represented in the detail of figures 3A and 3B.

In this situation, the oil passage section through the shaped end of the cylindrical block 26 and the wall of the Belleville spring 34, flattened due to the increased biasing, reduces to a value below that of the calibrated hole 38. Therefore, the bowl 44, thrusted by the spring 50, goes back into rest position (figure 3A), resting on the retaining ring 52. Continuing with the actuation of the clutch control, intervention is made on the prebiasing of the springs 16, until the clutch plates 12 and 14 are completely detached.

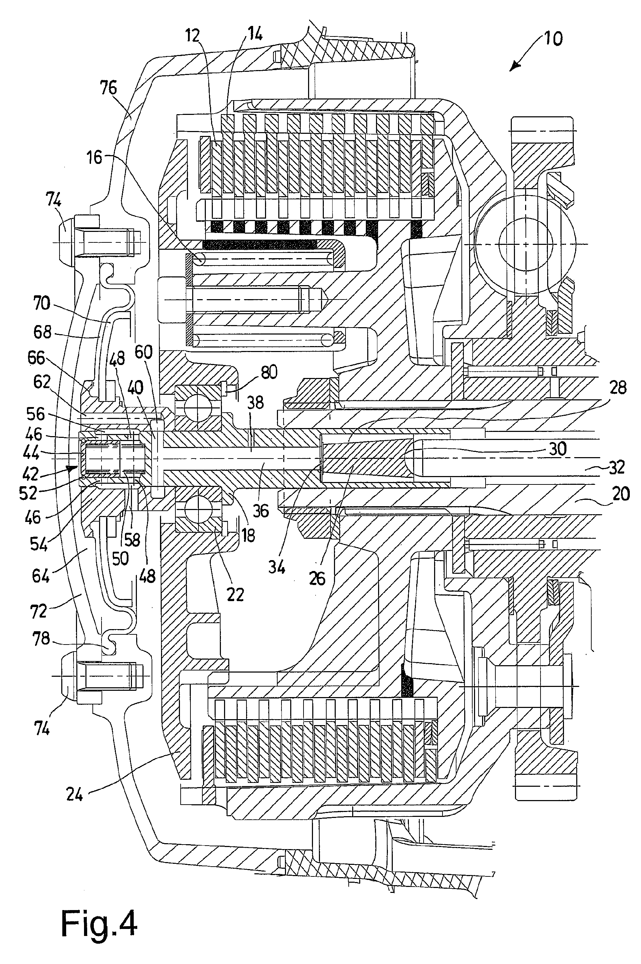

Figure 4 represents the automatic control device according to the invention precisely in this condition, in other words when, with the manual control of the clutch 10 completely actuated, the hydraulic follow-up link is excluded. The clutch springs 16 are compressed by the thrust plate 24, the clutch plates 12 and 14 are free and the mobile wall with the membrane 68 connected to the hub 54 has moved towards the cover 72, reducing the volume of the oil chamber 64, which in the meantime has flowed out from the transversal hole 38 through the channels that will make the oil itself go back towards the chamber 64 when the control of the clutch 10 shall be released.

It can thus be easily understood how the automatic device for controlling a clutch group integrated with a hydraulic follow-up link according to the invention, in addition to offering the advantage quoted above of being able to use a conventional clutch with a reduced spring biasing to cause the slipping of the plates 12 and 14, also makes it possible to have a biasing on the control that has never been above that of the springs 16 and, even during deceleration, in certain conditions, the biasing on the plates 12 and 14 increases through the follow-up link.

Moreover, in this situation the follow-up link can be excluded by acting just on the first portion of the manual control of the clutch, putting the drive wheel of the vehicle in bounce-prevention conditions. During deceleration the biasing of the springs 16 on the plates 12 and 14 is not altered, with the advantage of making it easier to perform a possible bump start in an emergency. It is important to highlight that the device according to the invention can be applied without distinction to the type of control of the clutch, which can be either mechanical or hydraulic.

The device described up to now is certainly valid to solve many of the behavioural problems that can emerge by using a clutch with conventional control, with a normal driving style, but it may not be sufficient to provide for the very advanced driving requirements linked with high-performance motorcycles. When the motorcycle is used at its limit, in certain situations there is a need to achieve the bounce-prevention condition of the rear wheel before actuating the clutch control, for example when in full throttle the brake is actuated ahead of the clutch, causing a transfer of biasing onto the forecarriage and thus putting the rear drive wheel in critical grip conditions.

In order to carry out the slipping of the clutch plates, in this and other situations, i.e. when the driver is not necessarily inclined to intervene on the clutch control, a more complete solution has been defined with the addition of some components for the electronic management of the system that act in parallel to the automatic control device described up to now.

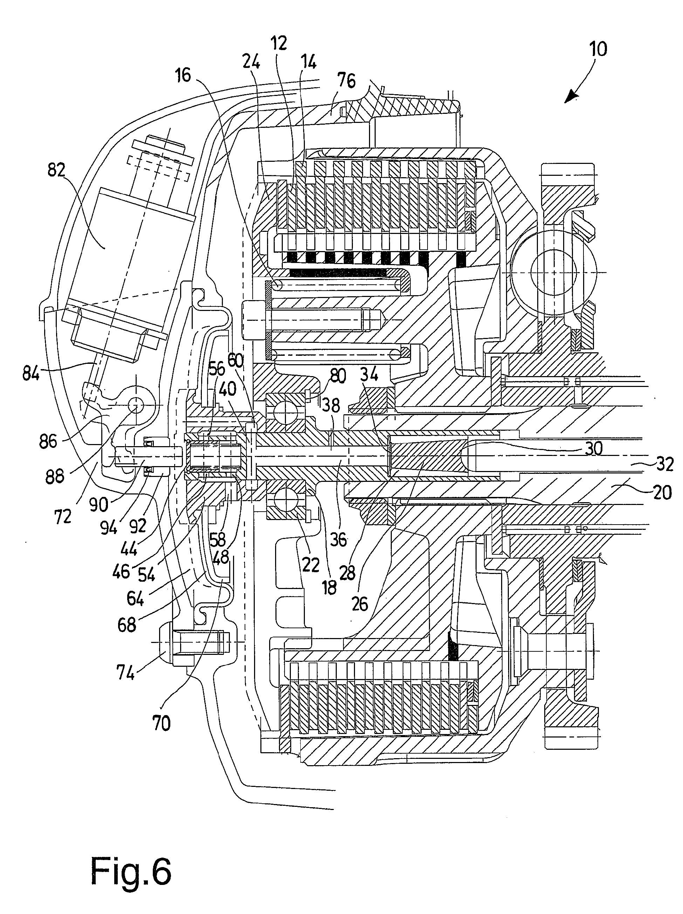

Figure 6 shows an automatic device for controlling a clutch group integrated with an electronically managed hydraulic follow-up link to carry out the controlled slipping of the clutch plates. It should be specified that in this figure only the components that are added or modified compared to the basic version of the automatic control device, illustrated in the previous figures, are highlighted.

All of the components that are actuated by the electronic management of the system are mounted in a suitable seat formed in the closing cover 72. The element that receives the control is a solenoid 82, represented in rest conditions with its own end 84 in contact with a rocker arm lever 86. The rocker arm lever 86, hinged on a pin 88 fixedly connected to the cover 72, transmits the movement to a barrel 90, free to slide axially in a seat 92 where a sealing element 94 is also housed. The barrel 90, due to the pressure in the chamber 64, maintains the contact with the end of the rocker arm lever 86.

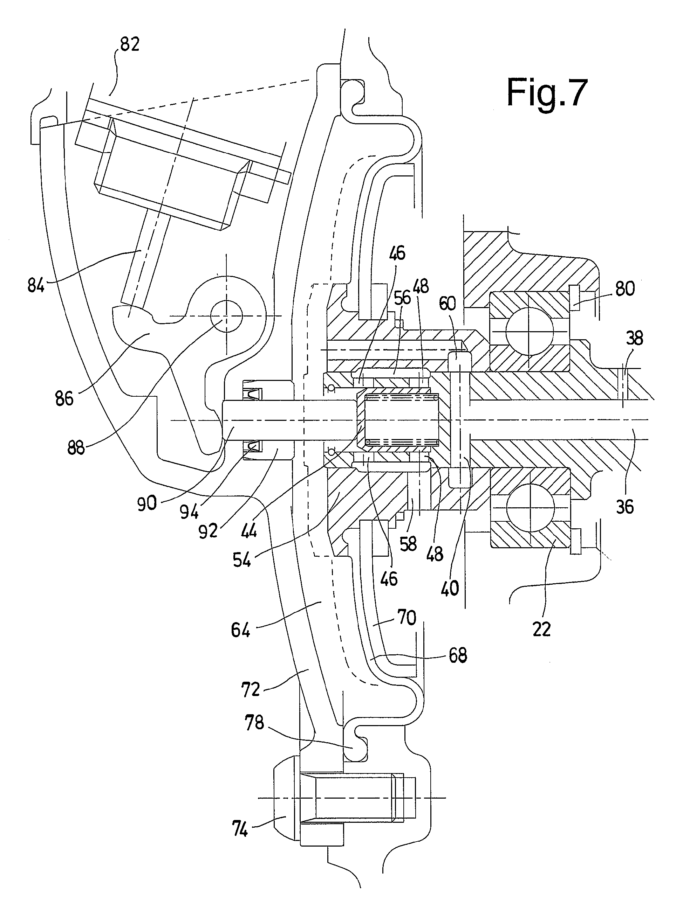

When the electronic gearcase (not shown) of the vehicle, which processes the information coming from sensors suitably arranged on the various members of the motor and of the vehicle itself, sends the signal to excite the solenoid 82, this intervenes on the device as shown in figure 7.

In practice, the end 84 of the solenoid 82 thrusts upon the rocker arm lever 86, which in turn actuates the barrel 90 making it move forward axially towards the bowl 44. The bowl 44 then pulls back until it uncovers the holes 46 of the limitation valve 42, causing the flow of the oil out from the chamber 64 and the consequent zeroing of the pressure that acts upon the clutch plates 12 and 14.

In the case in which, in this situation, the manual control of the clutch 10 is also actuated by the driver and therefore the entire equipment consisting of the hub 54 and the membrane 68 move towards the maximum bulk position, highlighted with a broken line in figure 6, such equipment does not come into conflict with the position taken up by the mechanical members set up for electronic management, since the automatic deactivation occurs when acting with the clutch control. If the two commands should interfere due to an anomaly in the system, the mechanical actuation of the clutch 10, which moves with a biasing much greater than that of the electronic management, would have no problem in making the barrel 80 and all of the chain of components connected to it up to the solenoid 82 pull back.

The solution represented in figure 6 takes into account the requirements of bulk present on motorcycles, where in general the end of the clutch cover represents one of the most outer bulks of the engine. Without this restriction, the solution could be greatly simplified, placing the solenoid 82 on the axis of the clutch, with its end 84 directly in contact with the barrel 90.

It has thus been seen that the automatic clutch control device, integrated with a hydraulic follow-up link, to carry out the controlled sliding of the plates of the clutch of a vehicle, in particular a two-wheeled vehicle, according to the present invention achieves the purposes highlighted previously. In particular, compared to clutches with known bounce-prevention devices, the device according to the invention differs for the following details:
- use of a conventional clutch, with reduced spring biasings;
- during acceleration the biasing on the plates increases, but the biasing on the control remains unchanged;
- during deceleration the biasing on the plates is not altered, with the advantage of making it easier to perform a possible bump start in an emergency;
- all of the components of the device can easily be made with conventional technologies, with the advantage of a low overall cost.

Moreover, such a device, in its basic most cost-effective version, is suitable for being used on medium or medium-high performance vehicles, with suitable costs for this category of vehicles. For vehicles equipped with engines with larger displacement or else intended for high-speed use, where the vehicle is often used at its upper limit, the described device can on the other hand be implemented with the addition of the electronic management components, so as to make it sensitive to other parameters like for example the actuation of the front brake, particular biasing and engine revolution conditions, and yet more.

The automatic clutch control device of the present invention thus conceived can in any case undergo numerous modifications and variants, all of which are covered by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Automatic device for controlling the clutch group (10) of a vehicle, the clutch group (10) comprising one or more plates (12, 14) biased by one or more springs (16), said plates (12, 14) being actuated by means of a thrust plate (24) supported on a thrust shaft (18) housed with mobile coupling with the end of the primary shaft of the gearshift (20), **characterised in that** inside of said thrust shaft (18) some channels are foreseen to make pressurised oil flow that feeds an airtight chamber (64) formed inside the casing (76) of said clutch (10), said pressurised oil contained in said airtight chamber (64) actuating a mobile equipment capable of providing an additional biasing, with respect to the biasing provided by said one or more springs (16), on said one or more plates (12, 14) when the manual control of said clutch (10) is not actuated.

2. Device according to claim 1, **characterised in that** said channels to make pressurised oil flow comprise a cylindrical block (26), provided with one or more longitudinal grooves (28) for the passage of the oil and arranged inside of said thrust shaft (18).

3. Device according to claim 2, **characterised in that** said channels for making pressurised oil flow also comprise a hole (36) formed longitudinally inside of said thrust shaft (18), said hole (36) communicating with a hole (40) formed transversally inside of said thrust shaft (18).

4. Device according to claim 3, **characterised in that** between said cylindrical block (26) provided with said longitudinal grooves (28) and said longitudinal hole (36) of said thrust shaft (18) at least one elastic element (34) is arranged that performs the function of a delivery valve of the pressurised oil.

5. Device according to claim 4, **characterised in that** said at least one elastic element (34) consists of a Belleville or diaphragm spring.

6. Device according to claim 4, **characterised in that** said hole (36) is placed in communication with a transversal hole (38) for the outlet of the oil to ensure the lubrication of the moving members of said clutch group (10).

7. Device according to claim 6, **characterised in that** said transversal hole (38) is made with a bottom passage section, based upon a predetermined ratio, with respect to the passage section of the valve consisting of said elastic element (34).

8. Device according to claim 4, **characterised in that** at the end of said thrust shaft (18) opposite that on which said elastic element (34) acts the seat for a oil pressure limitation valve (42) is formed.

9. Device according to claim 8, **characterised in that** said limitation valve (42) is made up of a bowl (44), able to slide in the longitudinal direction of said thrust shaft (18) following the thrust of said pressurised oil that flows through one or more holes (46) formed on said limitation valve (42).

10. Device according to claim 9, **characterised in that** said limitation valve (42) is provided on its inside with a spring (50) that keeps said bowl (44) prebiased on a retaining ring (52) when the oil pressure does not reach a certain predetermined value.

11. Device according to claim 10, **characterised in that** said limitation valve (42) is provided with transversal holes (48) for the outlet of the oil when said bowl is prebiased by said spring (50).

12. Device according to claim 8, **characterised in that** said mobile equipment comprises a hub (54) inserted around the end of said thrust shaft (18) opposite to the one on which said primary shaft of the gearshift (20) is coupled.

13. Device according to claim 12, **characterised in that** said hub (54) is provided with an oil discharge port (56) in communication with the outside through a transversal hole (58).

14. Device according to claim 12, **characterised in that** said hub (54) is provided with an inner throat (60), intercepted by a longitudinal hole (62), for sending the oil from said limitation valve (42) into said airtight chamber (64).

15. Device according to claim 12, **characterised in that** said hub (54) is provided with a shaping (66) of its outer collar, where a membrane (68) and a plate (70) are housed that make the mobile wall of said airtight chamber (64), with a sealed coupling with said hub (54).

16. Device according to claim 15, **characterised in that** said airtight chamber (64) is closed by a cover (72) provided with screws (74) that engage on the circular crown-shaped interface formed on said casing (76).

17. Device according to claim 15, **characterised in that** said casing (76) is provided with an outer seat for the collar (78) of said membrane (68).

18. Device according to any one of the previous claims, also comprising electronic means for managing said automatic control device.

19. Device according to claim 18, **characterised in that** said electronic management means comprise a solenoid (82) controlled by the electronic gearcase of said vehicle to actuate said mobile equipment.

20. Device according to claim 19, **characterised in that** said solenoid (82) is able to actuate said mobile equipment by means of a barrel (90) free to slide axially in a seat (92) in the longitudinal direction of said thrust shaft (18).
